Europäisches Patentamt

European Patent Office

Office européen des brevets

(11) Publication number: **0 138 910 B1**

# EUROPEAN PATENT SPECIFICATION

(45) Date of publication of patent specification: 11.05.88

(21) Application number: 84901277.8

(22) Date of filing: 27.02.84

(86) International application number:
PCT/US84/00284

(87) International publication number:
WO 84/03744 27.09.84 Gazette 84/23

(51) Int. Cl.⁴: **F 16 H 1/38,** F 16 H 57/02,
B 23 D 43/02

(54) DIFFERENTIAL APPARATUS AND METHOD OF MAKING.

(30) Priority: 15.03.83 US 475525

(43) Date of publication of application:
02.05.85 Bulletin 85/18

(45) Publication of the grant of the patent:
11.05.88 Bulletin 88/19

(84) Designated Contracting States:
BE DE FR GB NL SE

(56) References cited:
EP-A-0 138 912
CA-A- 617 012
JP-A-85 000 089
US-A-2 292 440
US-A-2 431 343
US-A-2 726 435
US-A-2 859 641
US-A-2 975 682
US-A-3 735 647
US-A-3 849 862
US-A-3 875 824
US-A-3 884 096

(73) Proprietor: THE GLEASON WORKS
1000 University Avenue
Rochester New York 14692 (US)

(72) Inventor: GLEASMAN, Vernon, E.
11 Pond View Drive
Pittsford, NY 14534 (US)

(74) Representative: Harrison, David Christopher
et al
MEWBURN ELLIS & CO 2/3 Cursitor Street
London EC4A 1BQ (GB)

(56) References cited:
US-A-3 901 103
US-A-3 902 237
US-A-3 905 089
US-A-3 974 717
US-A-4 191 071
US-A-4 365 524

Car and Driver, issued December 1983, Art
Patstone, Vive la Differential, page 28

Courier Press, Leamington Spa, England.

## Description

The present invention relates generally to differential mechanisms and in particular to a new and improved differential case for use with a cross axis compound planetary gear differential assembly.

US—A—2 859 641 to Gleasman discloses a worm gear differential mechanism, termed a "cross-axis compound planetary gear complex". The disclosed differential includes a differential case that mounts gear elements which couple rotation of the differential case to axles extending into the case. In particular, a pair of axle drive gears (also termed traction or side gears) are located within the differential and are received and rotatably coupled with ends of the axles. Pairs of balancing gears are mounted in windows disposed in the case and split driving torque between the side gears. In the embodiment illustrated in this Gleasman patent, the differential case is actually an assembly held together by spacer bolts and other fasteners. In addition, three pairs of balancing gears are employed and hence the differential case assembly includes three windows. Although the differential, disclosed in this Gleasman patent, operates extremely well, it is nevertheless desirable to reduce its manufacturing cost.

Some attempts have been made to reduce the cost of this differential. One such attempt included the substitution of a one piece casting for the individual components that made up the original differential case. Although the cost of producing the differential was reduced by fabricating the differential case from a casting, significant expense was still incurred in machining the raw casting. In particular, each of the three windows required separate machining steps to provide the necessary surface finish to the balancing gear mounting and locating surfaces. In addition, side thrust surfaces for the axle drive gears and/or thrust bearings necessitated the internal machining of the casting to provide the required surface finish. In short, although some cost in producing the differential was saved by the utilization of the cast diferential case, the construction of the differential case did not lend itself to high speed production methods.

CA—A—617012 discloses a two part case for a differential of this type, having opposed transfer gears, wherein positioning surfaces for the transfer gears are provided by further parts, namely reaction plates bolted into the assembly.

According to the invention a new differential is disclosed which includes an integral, one-piece, differential case that simplifies the construction and assembly of the differential and significantly reduces its manufacturing cost. The present invention also encompasses a process for making the case and in particular includes a process for finishing the requisite machined surfaces that coact with or locate the gear components in the differential assembly.

According to the preferred embodiment, the differential case is a unitary casting and comprises end portions disposed on either side of an intermediate portion and having axle receiving bores through which an axle will be inserted to engage internal gear components supported within the differential case. As is conventional, the trunnions are adapted to receive bearings by which the differential case is rotatably mounted to a differential housing. The trunnions define an axis of rotation for the case.

The intermediate portion of the differential case defines a through passage which in the illustrated and preferred embodiment, is four sided. At each end of the through passage are windows in which transfer gearing is mounted.

Each gear window is defined, at least in part, by opposed, spaced apart transverse wall sections, the sections being disposed in parallel planes that extend on either side of the axis of rotation of the differential case. These wall sections are machined by broaching to provide locating and reaction surfaces for the gears mounted within the window.

The passage is further defined by another pair of spaced apart side walls disposed in parallel planes that intersect and are normal to the axis of rotation of the differential case. These side wall sections are machined by broaching to define locating and reaction surfaces for axle drive gears and/or thrust bearings disposed between inside of the case and the axle drive gears.

The construction of the differential case is disclosed for use with a cross axis compound planetary gear differential of the type described in US—A—2 859 641, but in which two pairs of balancing gears are used to cross couple the axle drive gears instead of three pairs as disclosed in that patent. The unitary case reduces assembly time of the differential and even more importantly, the cost of producing the case is substantially less than the cost of producing a differential case comprised of individual components.

According to additional features of the invention, the intermediate portion may define pairs of aligned bores located at the transfer gear windows that extend perpendicularly with respect to the window wall sections. The bores accept shafts which rotatably carry the transfer gears. In addition, the case preferably defines integrally formed lugs constructed to receive a retaining arrangement for securing the transfer gear shafts in position.

The present invention also provides a new and improved method for making the differential case. In accordance with the preferred embodiment, a broaching process is used to machine at least two sides, but preferably four sides, of the passage simultaneously. In particular, a four sided broaching tool may be driven through the passage to finish machine the window wall sections and the intermediate or side gear wall sections. Depending on the broach construction, both ends of the passage may be finish machined in a single broaching cycle.

The disclosed differential case construction and method greatly reduces the expense associated with producing the differential described above. The casting from which the differential case is ultimately formed requires minimal machining to produce a finished product. By using the disclosed broaching method, high speed production of the differential can be achieved.

Additional features will become apparent and a fuller understanding of the invention will be obtained by reading the following detailed description made in connection with the accompanying drawings, wherein:

Figure 1 is a side elevational view of a differential case constructed in accordance with the preferred embodiment of the invention;

Figure 2 is a left end view of the differential case shown in Figure 1;

Figure 3 is a right end view of the differential case shown in Figure 1;

Figure 4 is a sectional view of the differential as seen from the plane indicated by the line 4—4 in Figure 1, shown with differential gear components.

Figure 5 is yet another side elevational view of the differential case shown with a broaching tool in position;

Figure 6 is a sectional view as seen from the plane indicated by the line 6—6 in Figure 5.

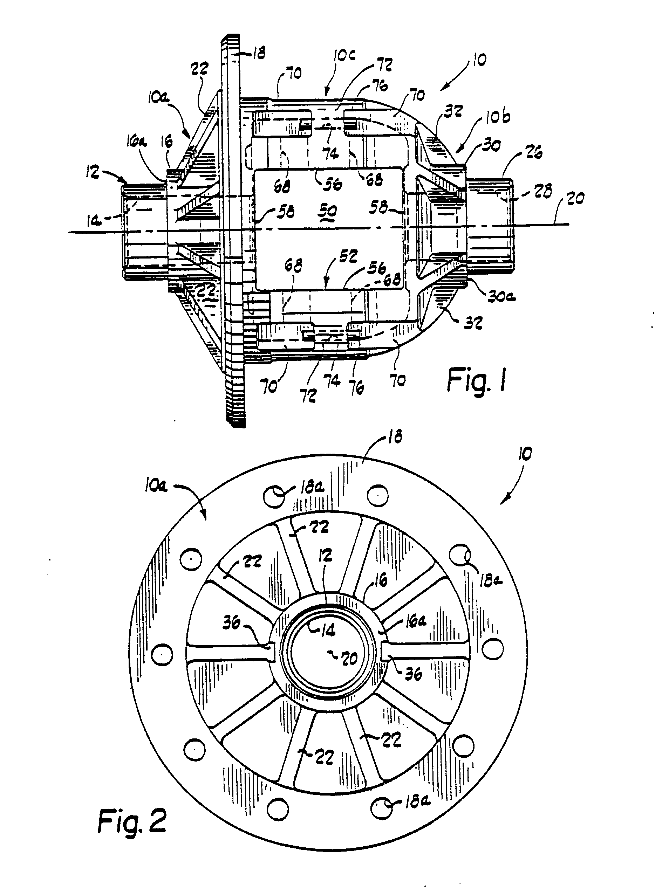

The overall construction of a differential case 10, constructed in accordance with the preferred embodiment of the invention is illustrated in Figures 1—3. The case 10 is formed from an integral casting and includes end portions 10a, 10b disposed on either side of an intermediate portion 10c.

The end portion 10a includes a trunnion 12 defining, at least in part, an internal bore 14 through which a drive axle (not shown) extends into engagement with internal gear components. The trunnion 12 is typically a machined annulus adapted to receive a bearing by which the differential case is rotatably mounted to a differential housing (not shown). The trunnion extends outwardly from a larger diameter, unmachined hub 16 that defines a shoulder 16a against which the bearing (not shown) seats.

The left end portion 10a (as viewed in Figure 1) also defines a flange 18 that includes a plurality of apertures 18a by which a ring gear (not shown) is mounted to the differential case. The flange 18 defines an axis of rotation 20 for the case 10.

In the illustrated embodiment, a plurality of reinforcing, gusset-like ribs 22 radiate outwardly from the unmachined hub 16 and merge with the base of the mounting flange 18. The ribs 22 reinforce the end portion 10a and rigidize the location of the trunnion 12.

The right end portion 10b is similarly configured and includes a trunnion 26 defining, at least partially, an axle receiving bore 28. The trunnion 26 is defined by a machined annulus that extends outwardly from an unmachined hub 30, of larger diameter, thereby defining a shoulder 30a against which a bearing (not shown) seats.

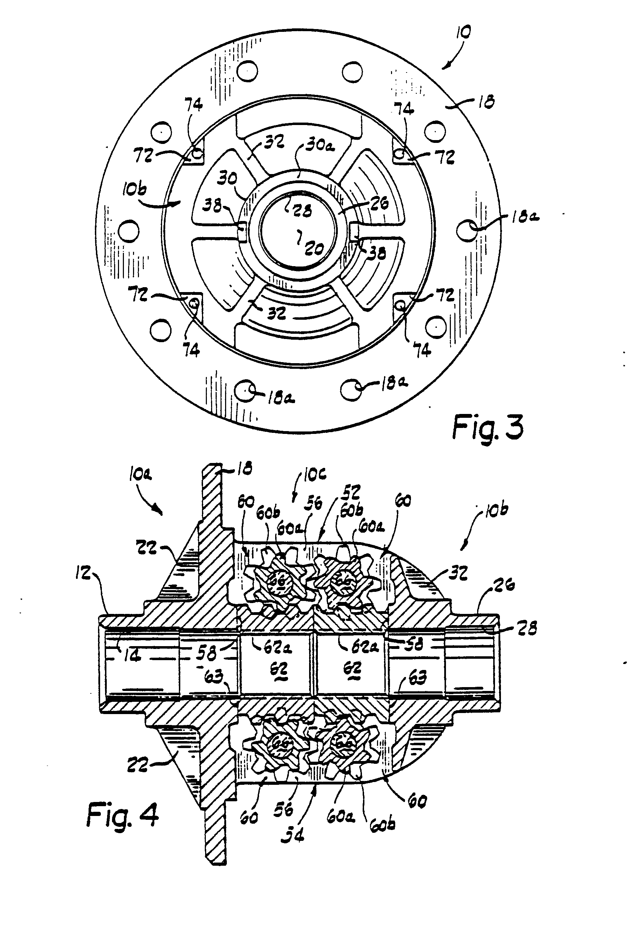

Like the end portion 10a, in the disclosed embodiment, radial ribs 32 radiate outwardly from the unmachined hub 30, to reinforce the right end portion 10b and the position of the trunnion 26. As seen in both Figures 2 and 3, reliefs 36, 38 are formed in the hubs 16, 30, respectively, to provide clearance for a suitable bearing removal tool, in the event replacement of the differential bearings is required.

The intermediate portion 10c is located between the end portions 10a, 10b. According to the invention, the intermediate portion defines a through passage 50, which in the preferred and illustrated embodiment is of a four sided configuration. Opposite ends of the passage (only one end is shown in Figure 1) define aligned openings 52, 54 or "windows" in which gear components, to be described, are operatively carried (shown in Figure 4).

Each window 52, 54 is defined by opposed, machined window wall sections 56. The wall sections 56 are parallel to and disposed in planes that extend on either side of the axis 20.

The passage 50 is further defined by spaced apart wall sections 58 disposed intermediate the window wall sections 56, which provide mounting and reaction surfaces for axle drive differential gearing components to be described. The intermediate wall sections 58 define surfaces disposed in parallel planes that extend normal to the axis of rotation 20.

Referring also to Figure 4, the window wall sections 56 define mounting and/or thrust surfaces for transfer gears 60 mounted in the windows. The operation of the transfer gears are fully described in US—A—2 859 641. By way of summary, each transfer gear 60 includes an "irreversible" gear portion formed as a worm wheel 60a, for example, and a pair of "reversible" balancing gears such as spur gears 60b disposed at opposite ends of the worm wheel (only one spur gear of the pair is shown in Figure 4). Axle drive gears 62 formed as "worm" gears are disposed centrally within the differential case and rotatably engage the ends of axles (not shown) which extend through the bores 14, 28. In the embodiment shown, the axle drive gears 62 each include a splined internal bore 62a which is adapted to engage external splines formed on the axle end (not shown). The worm wheel portions 60a of the transfer gears 60 engage the axle drive gears 62. The transfer gears 60 that form a pair, as seen in Figure 4, are coupled to each other by the spur gears 60b. The pairs of transfer gears 60 thus cross couple the axles to each other and split torque between the axles. It should be noted that the axle drive gears No. 62 and the irreversible gear portions 60a of the transfer gears 60 can be cross axes helical gears.

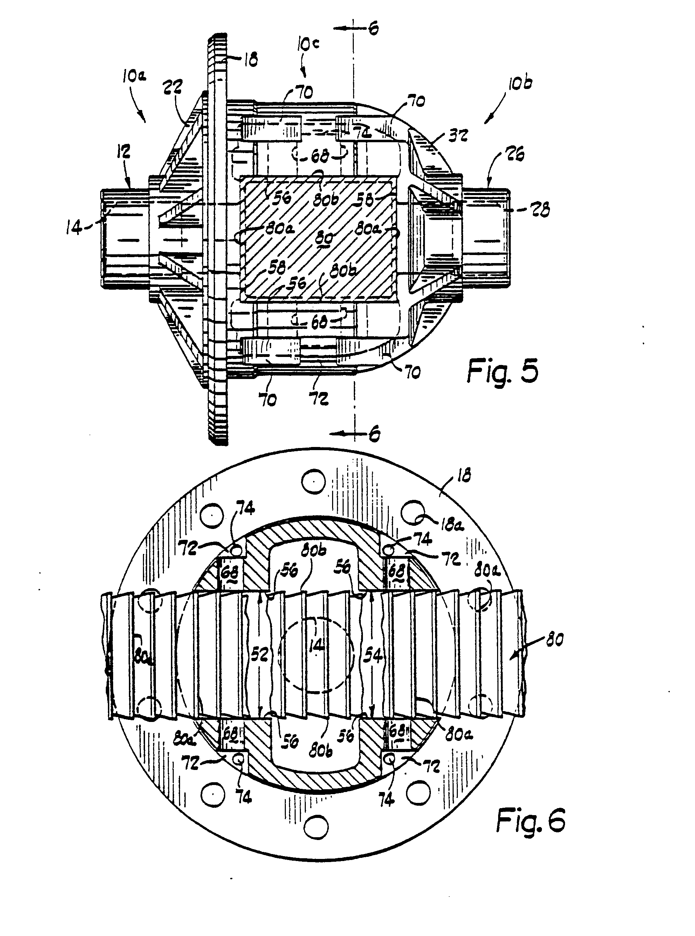

As seen best in Figure 4, the transfer gears 60 rotate on shafts 66. Referring also to Figures 1 and 6, the shafts 66 span the windows 52, 54, their ends being supported by aligned bores 68 that open on one end into the windows. The other ends of the bores 68 open into relieved areas 70 formed on the periphery of the intermediate section 10c of the differential case at spaced locations. A lug-like structure 72 separates the adjacent relieved areas and includes a bore 74 (shown best in Figure 3) adapted to receive a pin 76 (shown in Figure 1) for maintaining the position of a shaft 66 in its associated bores 68. It should be noted that other arrangements can be used to maintain the shafts 66 in position.

In the embodiment shown, to install a pair of transfer gears 60 in the window of the differential case, the gears are positioned between the wall sections 56 in alignment with the bores 68. The shafts 66 are passed from one bore 68 through the transfer gear 60 and into its associated, spaced bore 68. The position of the shaft is then fixed by the pin 76.

As seen in Figure 4, the axle drive gears 62 are disposed side-by-side within the differential case and are engaged by associated worm wheel portions 60a of the transfer gears 60. Each of the axle drive gears 62 includes an outward end face 63 that abuts a respective one of the intermediate wall sections 58. Thus, the intermediate wall sections 58 locate the axle drive gears within the housing and can receive side loading or end thrust from the gears.

According to the invention, a broaching process is used to machine the passage 50, and in particular to simultaneously finish machine the window wall sections 56 and the intermediate wall sections 58. Turning now to Figures 5 and 6, the differential is shown with a broaching tool 80 in position. As viewed in Figure 5, the broach includes a plurality of vertical and transverse teeth 80a, 80b, respectively. According to the method, the cross-section of the broach defines the finish dimension of the passage 50. The vertically oriented teeth (as viewed in Figure 5) cut the intermediate wall sections 58 and the transversely oriented teeth 80b cut the window wall sections 56. In accordance with the method, the broach 80 is inserted from one end of the passage 50. As it passes through the passage 50, during a broaching cycle or cutting stroke, the window and intermediate wall sections 56, 58 are finish sized. In the preferred method, the broaching process provides the final surface finish for all of wall sections. As is conventional, the cross-section of the broach typically tapers from one end to the other so that material is gradually cut from the passage 50. Depending on the type of broach and broaching machine used, the passage 50 in the differential case can be finish machined in one step or multiple steps. For example, a roughing broach may initially be used to rough machine the passage followed by a finishing broach. The window wall sections 56 of both windows 52, 54 may be machined in one broaching cycle or, alternately, the broach 80 may be inserted from one end to finish one window opening 52 and then removed and reinserted from the other window to finish machine the window wall sections 56 of the second window 54.

The disclosed invention greatly reduces the manufacturing cost of a differential case of the type that includes transfer gearing mounted in window openings that cross-couple axle drive gears. The integral casting used for the differential case eliminates the cost incurred in assembling a differential case from individual components. By machining the passage 50 with a broach or similar method, precision locating and thrust surfaces for the transfer gears 60 and the axle drive gears 62 are obtained without undue expense. The "broached surfaces" in the passage eliminate the need for complex and expensive internal machining of the differential case that would otherwise be required.

It should be appreciated by those skilled in the art, that the present invention is adaptable to a variety of differential assemblies. The invention has been disclosed in connection with a differential that includes a single pair of transfer gears 60 located in each window 52, 54. The present invention can also be used to produce a differential case for use with a differential that includes additional gearing within the windows such as the differential assembly disclosed in our copending application EP—A—138912.

## Claims

1. An integral differential case (10) for a cross axis, compound planetary gear differntial comprising:

a) an end portion (10a) defining a first axle-receiving bore (14);

b) another end portion (10b) spaced from said one end portion, including another axle-receiving bore (28) coaxial with the first;

c) an intermediate portion (10c) between the end portions (10a, b);

d) the intermediate portion including a pair of spaced-apart transfer gear windows (52, 54) aligned with each other to offer a straight through-passage (50) across the portion;

e) each window deined at least partially by a pair of spaced-apart wall sections (56) of the portion (10c), each of the window wall sections (56) including a broached mounting surface for locating transfer gears (60) of the differential when mounted in the window;

f) the intermediate portion (10c) further including intermediate wall sections (58) located intermediate the transfer gear windows (52, 54), each of the intermediate wall sections (58) defining a broached machined surface in a plane normal to the axis of the bores for locating respective axle drive gears (62) when mounted within the intermediate portion.

2. The differential case of claim 1 wherein the intermediate portion (10c) further includes pairs of aligned bores (68) located at the windows (52, 54) extending perpendicularly with respect to the wall sections (56).

3. The differential case of claim 2 wherein the intermediate portion (10c) further includes integrally formed lugs (72) for receiving means (76) for retaining a shaft in a said bore (68).

4. A method of making an integral one-piece differential case (10) having end portions (10a, b) each with one of a pair of coaxial axle-receiving bores (14, 28) and an intermediate portion (10c) with aligned windows (52, 54) for receiving transfer gears (60), the windows (52, 54) being openings in the intermediate portion (10c) defined by transverse walls (56) and side walls (58) in planes normal to the axis of the bores, the method involving machining the transverse walls by broaching the material of the intermediate portion with a broaching tool (80) penetrating the windows (52, 54) to define thereby surfaces for reaction and location of transfer gears (60) and axle drive gears (62).

5. A method according to claim 4 wherein both the transverse and side walls are formed in a single broaching cycle.

**Patentansprüche**

1. Einstückiges Differentialgehäuse (10) für ein Verbund-Planetendifferentialgetriebe mit Querwelle, bestehend aus

a) einem Endbereich (10a), der eine erste Achsaufnahmebohrung (14) begrenzt,

b) einem im Abstand von dem einen Endbereich angeordneten anderen Endbereich (10b), der eine zu der ersten Achsaufnahmebohrung koaxiale andere Achsaufnahmebohrung (28) aufweist,

c) einem Zwischenbereich (10c) zwischen den Endbereichen (10a, b),

d) wobei der Zwischenbereich zwei im gegenseitigen Abstand angeordnete Übertragungszahnrad-Fenster (52, 54) aufweist, die miteinander fluchten, um quer zu dem Zwischenbereich einen geraden Durchgangskanal (50) zu schaffen,

e) wobei jedes Fenster zumindest teilweise von zwei im gegenseitigen Abstand angeordneten Wandabschnitten (56) des Bereichs (10c) begrenzt ist, wobei jeder der Fensterabschnitte (56) eine geräumte Lagerfläche zur Lagerung der Übertragungszahnräder (60) des Differentialgetriebes aufweist, wenn diese in das Fenster eingesetzt sind,

f) wobei der Zwischenbereich (10c) ferner Zwischenwandabschnitte (58) aufweist, die zwischen den Übertragungszahnrad-Fenstern (52, 54) angeordnet sind, wobei jeder Zwischenwandabschnitt (58) eine durch Räumen bearbeitete Fläche in einer Ebene normal zur Achse der Bohrungen aufweist, um entsprechende Antriebsschneckenräder (62) zu lagern, wenn diese in den Zwischenbereich eingesetzt sind.

2. Differentialgehäuse nach Anspruch 1, wobei der Zwischenbereich (10c) ferner Paare von miteinander fluchtenden Bohrungen (68) aufweist, die an den Fenstern (52, 54) angeordnet sind und sich rechtwinklig zu den Wandabschnitten (56) erstrecken.

3. Differentialgehäuse nach Anspruch 2, wobei der Zwischenbereich (10c) ferner einstückig ausgebildete Angüsse (72) zur Aufnahme von Mitteln (76) aufweist, um eine Welle in einer dieser Bohrungen (68) festzulegen.

4. Verfahren zur Herstellung eines einstückigen einteiligen Differentialgehäuses (10) mit Endbereichen (10a, b), die jeweils eine von zwei koaxialen Achsaufnahmebohrungen (14, 28) aufweisen, und mit einem Zwischenbereich (10c), der miteinander fluchtende Fenster (52, 54) zur Aufnahme von Übertragungszahnrädern (60) aufweist, wobei die Fenster (52, 54) Öffnungen in dem Zwischenbereich (10c) sind, der durch Querwände (56) und durch Seitenwände (58) in Ebenen normal zur Achse der Bohrungen begrenzt ist, wobei das Verfahren die Bearbeitung der Querwände durch Räumen des Materials des Zwischenbereichs mit einem Räumwerkzeug (80) umfaßt, das die Fenster (52, 54) durchdringt, um dadurch Flächen zur Abstützung und Aufnahme der Übertragungszahnräder (60) und der Antriebsschneckenräder (62) zu bilden.

5. Verfahren nach Anspruch 4, wobei sowohl die Querwände als auch die Seitenwände in einem einzigen Räumvorgang gebildet werden.

**Revendications**

1. Carter de différentiel intégral (10) pour un différentiel à engrenages planétaires associés à axes croisés comprenant:

a) une partie d'extrémité (10a) définissant un premier alésage de réception d'essieu (14);

b) une autre partie d'extrémité (10b) espacée de ladite partie d'extrémité, comportant un autre alésage de réception d'essieu (28) coaxial au premier;

c) une partie intermédiaire (10c) entre les parties d'extrémité (10a, b);

d) la partie intermédiaire comportant une paire de fenêtres d'engrenages de transfert espacées (52, 54) alignées l'une avec l'autre pour offrir un passage traversant droit (50) à travers ladite partie;

e) chaque fenêtre définie au moins partiellement par une paire de sections de paroi espacées (56) de la partie (10c), chacune des sections de paroi (56) comportant une surface de montage brochée pour positionner des engrenages de transfert (60) du différentiel quand ils sont montés dans la fenêtre;

f) la partie intermédiaire (10c) comportant de plus des sections de paroi intermédiaires (58) situées de façon intermédiaire entre les fenêtres des engrenages de transfert (52, 54), chacune des sections de paroi intermédiaires définissant une surface usinée brochée dans un plan orthogonal à l'axe des alésages pour positionner des engrenages d'entraînement d'essieu respectifs (62) quand ils sont montés à l'intérieur de la partie intermédiaire.

2. Carter de différentiel de la revendication 1, dans lequel la partie intermédiaire (10c) comporte de plus des paires d'alésages alignés (68) situés au niveau des fenêtres (52, 54) s'étendant perpendiculairement par rapport aux sections de paroi (56).

3. Carter de différentiel de la revendication 2, dans lequel la partie intermédiaire (10c) comporte de plus des pattes formées en une seule pièce (72) pour des moyens de réception (76) pour retenir un arbre dans ledit alésage (68).

4. Procédé de fabrication d'un carter de différentiel intégral en une pièce (10) ayant des parties d'extrémité (10a, b) chacune présentant un alésage d'une paire d'alésages coaxiaux de réception d'essieu (14, 28) et une partie intermédiaire (10c) ayant des fenêtres alignées (52, 54) pour recevoir des engrenages de transfert (60), les fenêtres (52, 54) étant des ouvertures dans la partie intermédiaire (10c) définies par des parois transversales (56) et des parois latérales (58) dans des plans orthogonaux à l'axe des alésages, le procédé impliquant l'usinage des parois transversales en brochant la matière de la partie intermédiaire à l'aide d'un outil de brochage (80) pénétrant dans les fenêtres (52, 54) pour ainsi définir des surfaces de réaction et de positionnement des engrenages de transfert (60) et des engrenages d'entraînement d'essieu (62).

5. Procédé selon la revendication 4, dans lequel à la fois les parois transversales et latérales sont formées en un cycle de brochage unique.

Fig. 1

Fig. 2

Fig. 3

Fig. 4

0 138 910

Fig. 5

Fig. 6

3